# EUROPEAN PATENT APPLICATION

(11) **EP 4 567 015 A1**
(43) Date of publication of application: **11.06.2025**
(21) Application number: 23215053.2
(22) Date of filing: 07.12.2023
(51) Int. Cl.: C04B 28/16, C04B 18/14, C04B 7/32, C04B 14/10, C04B 103/00, C04B 14/18, C04B 18/24, C04B 14/02, C04B 111/52

(54) **BINDER COMPOSITIONS, COMPOSITES, AND ACOUSTIC ABSORPTION PANELS**

(71) Applicant: Kingspan Holdings (IRL) Limited, Kingscourt County Cavan (IE)
(72) Inventor: SANCHEZ, Jesus Rodriguez, Kingscourt, Co. Cavan (IE); ERIKANDATH, Sumesh, Kingscourt, Co. Cavan (IE)
(74) Representative: Tomkins & Co

(57) **Abstract**

A binder composition comprising:
(a) granulated slag;
(b) aluminate cement; and
(c) anhydrous calcium sulfate.

Composites, cured products, and acoustic absorption panels comprising the binder compositions can be made using energy sources that produce low levels of carbon dioxide

## Description

### Field of the Invention

The present invention relates to a novel binder composition. The invention further relates to composites, cured products, and acoustic absorption panels comprising the binder compositions. Of particular interest are those having a low carbon i.e. composites, cured products, and acoustic absorption panels comprising the binder compositions which can be made using energy sources that produce low levels of carbon dioxide (CO₂).

### Background to the Invention

Acoustic absorption panels are used to improve sound quality and/or reduce noise, for example they may be used on internal walls or ceilings in order to improve sound quality and reduce noise within interior spaces.

Acoustic absorption panels work by reducing the reverberation time of sound waves within an environment, improving intelligibility of speech and providing a sharper, less noisy, acoustic image.

Reverberation occurs when a sound wave hits an obstruction. The reverberation time is the time it takes for a sound to die out, measured from the point at which the sound source is interrupted. This varies based on the character and acoustic properties of the surrounding surfaces. A long reverberation time tends to lead to an echo effect as the first sound waves mix with subsequent sound waves. This is undesirable as it leads to a noisy environment in which it is difficult to distinguish individual sounds. With a short reverberation time, the acoustic image becomes more precise and sharp, and speech intelligibility is increased significantly.

Natural fibre components, for example wood wool, are desirable components for acoustic absorption panels since they have excellent sound absorption properties and are breathable and permeable. However, wood fibres naturally are flammable.

For acoustic absorption panels to be suitable for widespread use in interior walls and ceilings, it is important that they also provide effective fire protection.

Of course, it is also desirable for panels used in construction to be strong. For this purpose acoustic panels are often composite panels, for example a composite of a wool and a binder.

Cementitious binders can be used to improve the fire-resistance of construction panels made using fibre components. Cement serves the dual purpose of imparting both strength and fire resistance to the panels. While other fibre-based panels rely on added fire retardants and added oil-based binders, the cement serves both these purposes.

However, conventional cements like Portland cement have a high carbon footprint. Using cements can negate the environmental advantages of using a natural resource such as wood fibres, which themselves typically have low CO₂ footprints.

There remains a need for environmentally friendly binder compositions which can offer a high level of strength and fire resistance to composite panels without having a negative effect on their sound absorption capabilities. The present invention aims to address this need and to provide composites, cured products, and acoustic absorption panels comprising the binder compositions which can be made using energy sources that produce low levels of carbon dioxide (CO₂).

### Summary of the Invention

In one aspect, the present invention provides a binder composition comprising:
(a) granulated slag;
(b) aluminate cement; and
(c) anhydrous calcium sulfate.

The binder composition is a blend of components (a)-(c), which may be a ternary blend of components (a)-(c), which react to form a cured product. Without wishing to be bound by any specific theory, it is believed that components (a)-(c) interact with each other, and may interact synergistically with each other, to produce a stronger binder.

Preferably, the granulated slag is finely ground. This can increase its reactivity, which may in turn increase the binder strength.

The granulated slag may be ground granulated blast furnace slag (GGBS). Ground granulated blast furnace slag is a byproduct of the iron industry, which uses blast-furnace for producing pig iron from iron ore. It is produced by quenching/rapid cooling of molten iron slag to form granules, which is then ground to a fine powder which is called ground granulated blast-furnace slag (GGBS). It has a glassy/amorphous form and typically has a high concentration of oxides of silicon, aluminium, magnesium and calcium which gives it a cementitious nature. Slag from a blast-furnace is preferred due to its high glass content and chemical composition.

A preferred granulated slag grade such as a GGBS grade is one with a higher Blaine value (a measure of fineness/surface area). For example, the granulated slag may be GGBS with a Blaine value of at least 275 m²/kg, such as at least 400 m²/kg. A granulated slag with a Blaine value of no less than 275 m²/kg will comply with the EN 15167-1:2006 standard. The granulated slag may be GGBS with a Blaine value of at least 420 m²/kg. A high Blaine value increases the granulated slag's surface area and thus its reactivity.

The granulated slag such as GGBS forms calcium aluminosilicate hydrates in a high pH environment. Without wishing to be bound by any specific theory, it is believed that the required pH conditions for formation of calcium silicate hydrates and calcium aluminosilicate hydrates are met when the aluminate cement in the binder composition of the present invention is mixed with water. A suitable pH at which granulated slag such as GGBS forms calcium aluminosilicate hydrates is typically a pH of 11.5 or higher. Another advantage of having a higher Blaine (small particle size) granulated slag such as GGBS is that it can enhance the compression strength further by filling up some of the micropores formed during the hydration of calcium aluminate cement. In other words, some capillary voids may form during hardening of aluminate cement. Granulated slag such as GGBS particles could occupy these micropores or capillary voids and form calcium aluminosilicate hydrates or act as an inert filler, both of which are helpful to make the hardened cement paste more compact and strong. In other words, both granulated slag, such as GGBS, and aluminate cement work in tandem by helping each other. The hydration kinetics of slag are improved by increasing the pH and/or temperature. A pH of above 11.5 is considered desirable to hydrate the slag. If the pH of the slurry is low, a small quantity (for example up to 10% of weight of the slag) of an alkaline ingredient like quick lime (CaO), slaked lime (Ca(OH)₂), sodium carbonate etc. could be added to increase the pH to above 11.5.

The granulated slag may be a product of the steel industry, for example a product of Electric Arc Furnace (EAF) or Linz-Donawitz (LD) processes. The granulated slag may be a product from other metal industries, for example copper slag.

The granulated slag such as GGBS may comprise:
(a) at least 5% by weight of one or more aluminium oxides;
(b) at least 25% by weight of one or more silicon oxides; and
(c) at least 30% by weight of one or more calcium oxides.

The granulated slag such as GGBS may comprise:
(a) at least 7% by weight of one or more aluminium oxides;
(b) at least 30% by weight of one or more silicon oxides; and
(c) at least 35% by weight of one or more calcium oxides.

Suitably, the granulated slag is ground granulated blast furnace slag (GGBS), wherein calcium oxide (CaO), magnesium oxide (MgO), and silicon dioxide (SiO₂) together make up at least two-thirds by mass of the ground granulated blast furnace slag, and wherein the remainder of the mass comprises aluminium oxide (Al₂O₃). Suitably, the granulated slag is ground granulated blast furnace slag (GGBS), wherein the mass ratio (CaO + MgO)/(SiO₂) in the ground granulated blast furnace slag is greater than 1.0.

Desirably, the ground granulated blast furnace slag (GGBS) conforms with all other aspects mentioned in the BS EN 15167-1:2006 standard (Ground granulated blast furnace slag for use in concrete, mortar and grout; Part 1: Definitions, specifications and conformity criteria).

The binder composition may further comprise one or more of the following: calcined clays (such as metakaolin), microsilica, fumed silica, or other reactive pozzolanic materials.

The aluminate cement may comprise calcium aluminate cement and/or calcium sulfoaluminate cement. The aluminate cement may comprise one or more of the following mineral phases: CA, C₃A, C₁₂A₇, C₄AF, C₂AS, C4A3S or ye'elimite (naturally occurring form of anhydrous calcium sulfoaluminate). The aluminate cement may comprise amorphous calcium aluminate as well. The aluminate cement may comprise calcium silicate phases commonly found in Portland cement.

Without wishing to be bound by any specific theory, it is believed that the main mineral phases present in the aluminate cement react with calcium sulfate to form needle-shaped crystals known as ettringite in the presence of water. Formation of ettringite crystals starts within a few hours, which may be mainly responsible for the high early strength of the binder. The minor calcium silicate phases present in the aluminate cement may form calcium silicate hydrates which are mainly responsible for the later strength.

Anhydrous calcium sulfate (commonly known as anhydrite) is believed to increase the stability of ettringite, an important hydrated mineral formed when the binder composition is mixed with water and cured. The presence of anhydrous calcium sulfate in the binder composition, preferably in a ratio (anhydrite : aluminate cement) equal to or higher than 1:1 for an aluminate cement with high aluminate content or higher than 1:2 for an aluminate cement with low/moderate aluminate content, promotes the formation of ettringite (hexacalcium aluminate trisulfate hydrate) and also increases its stability.

The binder composition may further comprise one or more alternative forms of calcium sulfate, for example calcium sulfate dihydrate (gypsum) or calcium sulfate hemihydrate (e.g. plaster of Paris), or combinations thereof.

The binder composition may further comprise one or more fillers, optionally selected from the group comprising: carbonates such as calcium carbonate (e.g. limestone, chalk), magnesium carbonate, dolomite etc.; aluminosilicate-type minerals from nature like clay or perlite; low-reactive industrial waste like fly-ash; recycled construction waste (such as construction debris or crushed construction waste); carbon powder/biochar; crushed wood such as from recycled panels or other sources. Fillers may be used to reduce cost and/or CO₂ footprint of the binder. Fillers are also helpful in giving a filling/packing effect by occupying the micropores formed during cement hydration, and could also add to the overall compression strength. Fillers also help to reduce the heat of hydration thereby avoiding microcracks arising due to shrinkage of cement. Filler can even have a positive effect on the hydration kinetics of C-S-H phases, especially if the filler is finely ground with an increased surface area. Moreover, it helps with the stability of the ettringite formed, as the conversion of ettringite to monosulfoaluminate hydrate may be stopped in the presence of carbonate fillers.

The binder composition may further comprise one or more additional components, optionally selected from the group comprising: plasticisers, retarders, accelerators, thickeners, or combinations thereof. Such additional components can alter the binder properties such as workability and hydration kinetics. More than one additional component may be present in the binder composition in order to tune the properties as desired.

The binder composition may further comprise pigments, such as oxides of titanium (e.g. titanium dioxide), for example for colour correction.

The binder composition may further comprise water. As with conventional cements, mixing with water provides the curable form of the binder composition.

The binder composition may have a GWP (A1 to A3 stage) of less than about 500 kg CO₂eq., for example less than about 300 kg CO₂eq., for example in the range of from about 180 kg CO₂eq. to 250 kg CO₂eq.

The granulated slag may be present in the binder composition in an amount of from about 30 % to about 80 %, such as from about 40 % to about 60 %, wherein percentages are expressed as a percentage of the total weight of the composition.

The aluminate cement may be present in the binder composition in an amount of from about 10 % to about 40 %, for example from about 15 % to about 30 %, wherein percentages are expressed as a percentage of the total weight of the composition.

The granulated slag is suitably present in the composition in a higher proportion than the aluminate cement for a low-carbon footprint. Suitably, the weight ratio of granulated slag to aluminate cement present in the binder composition is at least 2:1, in other words twice as much granulated slag is present in the binder composition compared to the amount of aluminate cement present. The weight ratio of granulated slag to aluminate cement may be in the range from about 2:1 to about 3:1, such as at least 2.5:1.

In another aspect, the present invention relates to a cured product formed by curing a binder composition according to the invention.

Binder compositions of the invention react to form cured products when mixed with water.

Suitably, binder compositions of the invention are able to cure to form cured products at ambient conditions, for example at room temperature and pressure. However, it will be appreciated to those of skill in the art that changing the conditions, such as controlling the temperature or humidity, may lead to a quicker cure.

The cured product of the present invention may be applied to a fibre component. Typically, the cured product applied to the fibre is formed by applying the uncured product to the fibre, for example by mixing, and curing it on the fibre.

The fibre component may comprise a wood component such as a wood wool component.

In yet another aspect, the invention relates to a composite made from:
(a) a fibre component;
(b) a cured form of a binder composition according to the present invention; and
(c) water.

Typically, the binder composition is applied to the fibre component before curing of the binder composition.

Suitably, the fibre component may comprise fibres from one or more of the following: wood, grass, cattail, hemp, straw, textiles, eelgrass (zostera), cork, coconut, wool such as sheep wool, paper/cellulose. This includes any recycled fibres of the type mentioned above as well as for example recycled cement bonded wood wool board and combinations of recycled fibres.

Suitably, the fibre component comprises a wood wool component.

The fibre component may comprise spruce fibres.

The fibre component may comprise wood wool fibres having an average length of from about 5 cm to about 25 cm.

The fibre component and the binder composition may be present in the composite in a weight ratio of from about 1:1 to about 1:6, such as in a weight ratio of from about 1:2 to about 1:3. Such ratios are typical for the dried/cured product.

The composite of the invention is porous. Desirably, the composite of the invention is air permeable. This allows for sound waves to enter the porous cavities and be transformed to thermal energy.

The composite may have a density of from about 100 to about 1000 kg/m³, preferably from about 200 to about 700 kg/m³, obtained by dividing the weight of the composite, for example a composite in the form of a panel, in kilograms by its volume in cubic meters.

Desirably, the composite achieves a Euroclass 'A' or 'B' fire rating when measured according to EN13501-1.

In yet another aspect, the invention relates to an acoustic absorption panel comprising a binder composition of the invention and a fibre component.

The invention also relates to an acoustic absorption panel comprising a composite of the invention. A composite of the invention may be in the form of an acoustic absorption panel.

The acoustic absorption panels of the invention are suitable for use in construction, and are optionally structural panels. The may also be used to clad a surface such as in use for an interior design. For example, they can be used on internal walls or ceilings to increase sound absorption and reduce reverberation, improving sound quality in the room.

The acoustic absorption panels of the invention desirably can absorb sound waves across a broad spectrum of frequencies, for example from about 125 Hz to about 4000 Hz. Preferably, walls or ceilings made with the acoustic absorption panels of the invention achieve an 'A' class when tested according to DS/ISO 354.

Desirably, the acoustic absorption panels of the invention may have a GWP of over 75% lower than that of the equivalent acoustic absorption panels, which are otherwise the same apart from having been made with a conventional binder.

The fibre component and the binder composition may be present in the acoustic absorption panel in a weight ratio of from about 2:1 to about 1:6, such as in a weight ratio of from about 1:1 to about 1:6, for example in a weight ratio of from about 1:1 to about 1:3.

In yet another aspect, the invention relates to a method of making a composite, comprising the steps of:
(a) providing:
   (i) a fibre component; and
   (ii) a binder composition according to the invention;
(b) combining components (i) and (ii) in a weight ratio of from about 1:1 to about 1:6 to form a mixture; and
(c) allowing the mixture to cure.

The method may further comprise the step of soaking the fibre component with water, in between steps (a) and (b), to create a wet fibre component. The wet fibre component may then be combined with a binder composition (ii).

Preferably, the binder composition may be provided in powder form. However, it is also envisaged that the binder composition may be provided as a slurry, for example as an aqueous slurry.

The method may further comprise the step of forming the mixture made during step (b) into a panel form before the mixture cures. The mixture made during step (b) may be formed into a panel form by moulding or casting.

Desirably, the mixture begins to cure as soon as the components are combined in step (b).

The mixture may be left to cure under atmospheric temperature and pressure for a period of several days, for example at least 3 days, suitably at least 5 days, preferably at least 10 days.

Alternatively or additionally, the curing of the mixture may be accelerated, for example by exposing the mixture to conditions which accelerate the cure, such as elevated temperature and/or pressure and/or increased air flow, for example by exposing the mixture to heated air such as in an oven.

Optionally the curing of the mixture may take place inside a mould. In this case, several moulds containing the wholly or partially cured mixture may be stacked under pressure in order to accelerate the cure.

After the mixture has cured, the demoulded panel may be dried in a heated oven. For example, the panel may be heated in an oven at a temperature of at least 70 °C.

### Detailed Description

The experimental details as given herein below are exemplary of the binder compositions, methods, and composites according to the present invention.

**Table 1** shows the components of a binder composition according to the invention.

**Table 1**

| **Component** | **Weight % based on total weight of composition** |
|---|---|
| Ground granulated blast furnace slag (GGBS) | 55 |
| Calcium aluminate cement | 21 |
| Anhydrous calcium sulfate | 10 |
| Limestone/Chalk | 14 |

The dry ingredients listed in **Table 1** were mixed. A further 0.05-0.3% by weight of a superplasticiser was added to prepare a binder composition according to the invention, which was used to prepare a composite according to the following steps.

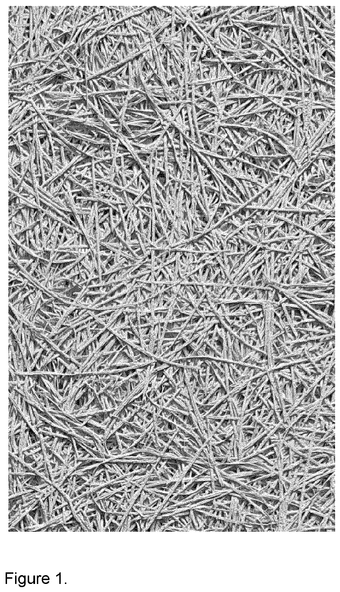

Wood wool fibres were dipped in water. The binder composition of the invention (**Table 1**) was then sprinkled over the wet wood wool fibres inside a turning mixer. The resulting mixture of wood wool fibres, binder composition, and water was added to a mould in two layers. Multiple filled moulds were stacked on top of each other and cured under load for 24 hours. The composites formed were demoulded and cured for a further 3 weeks in stacks, before being dried. After 24 hours of storage, the resulting composites could be edged and painted. The structure of a wood wool composite made according to the invention is shown in **Figure 1****.**

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A binder composition comprising:
(a) granulated slag;
(b) aluminate cement; and
(c) anhydrous calcium sulfate.

2. A binder composition according to claim 1, wherein the granulated slag is ground granulated blast furnace slag (GGBS), optionally wherein the granulated slag comprises:
(a) at least 5% by weight of one or more aluminium oxides;
(b) at least 25% by weight of one or more silicon oxides; and
(c) at least 30% by weight of one or more calcium oxides.

3. A binder composition according to any preceding claim, further comprising one or more of the following:
(a) one or more components selected from the group comprising: calcined clays (such as metakaolin), microsilica, fumed silica, other reactive pozzolanic materials, and combinations thereof;
(b) one or more alternative forms of calcium sulfate, for example calcium sulfate dihydrate (gypsum) or calcium sulfate hemihydrate (e.g. plaster of Paris), or a combination thereof;
(c) one or more fillers, optionally selected from the group comprising: carbonates, such as calcium carbonate (e.g. limestone, chalk), magnesium carbonate, dolomite etc.; aluminosilicate-type minerals from nature (such as clay or perlite); low-reactive industrial waste such as fly-ash; recycled construction waste (such as construction debris or crushed construction waste); carbon powder/biochar; crushed wood such as from recycled panels or other sources;
(d) one or more components selected from the group comprising: plasticisers, retarders, accelerators, thickeners, and combinations thereof;
(e) one or more pigments, such as oxides of titanium (e.g. titanium dioxide);
(f) water.

4. A binder composition according to any preceding claim,
wherein the granulated slag is present in an amount of from about 30 wt% to about 80 wt%, such as from about 40 wt% to 70 wt%, such as from about 40 wt% to about 60 wt% based on the total weight of the composition; and/or
wherein the weight ratio of granulated slag to aluminate cement is in the range from about 2:1 to about 3:1, such as at least about 2.5:1.

5. A cured product formed by curing a binder composition according to any preceding claim.

6. A cured product according to claim 8 when applied to a fibre component, optionally wherein the fibre component comprises a wood wool component.

7. A composite made from:
(a) a fibre component; and
(b) a cured form of a binder composition according to any of claims 1 to 7; and optionally
(c) water;
wherein the binder composition is applied to the fibre component.

8. A composite according to claim 11, wherein the fibre component comprises fibres from one or more of the following: wood, grass, cattail, hemp, straw, textiles, eelgrass (zostera), cork, coconut, wool such as sheep wool, paper/cellulose.

9. A composite according to any of claims 11 to 13, wherein the fibre component and the binder composition are respectively present in a weight ratio of from about 1:1 to about 1:6.

10. A composite according to any of claims 11 to 14, having one or more of the following properties:
(a) a density of from about 200 to about 1000 kg/m³, such as from about 200 to about 700 kg/m³;
(b) a Euroclass 'A' or `B' fire rating when measured according to EN13501-1.

11. A composite according to any of claims 11 to 16,
wherein the fibre component comprises fibres having an average length of from about 5 cm to about 25 cm; and/or
wherein the fibre component comprises spruce fibres.

12. A composite according to any of claims 11 to 18, wherein the binder composition further comprises one or more of the following:
(a) one or more components selected from the group comprising: calcined clays (such as metakaolin), microsilica, fumed silica, other reactive pozzolanic materials, and combinations thereof;
(b) one or more alternative forms of calcium sulfate, for example calcium sulfate dihydrate (gypsum) or calcium sulfate hemihydrate (e.g. plaster of Paris), or a combination thereof;
(c) one or more fillers, optionally selected from the group comprising: carbonates, such as calcium carbonate (e.g. limestone, chalk), magnesium carbonate, dolomite etc.; aluminosilicate-type minerals from nature (such as clay or perlite); low-reactive industrial waste such as fly-ash; recycled construction waste (such as construction debris or crushed construction waste); carbon powder/biochar; crushed wood such as from recycled panels or other sources;
(d) one or more components selected from the group comprising: plasticisers, retarders, accelerators, thickeners, and combinations thereof;
(e) one or more pigments, such as oxides of titanium (e.g. titanium dioxide);
(f) water.

13. A composite according to any of claims 11 to 20 in the form of an acoustic panel.

14. An acoustic absorption panel comprising a binder composition according to any of claims 1-7 wherein the binder composition is in cured form.

15. A method for making a composite, comprising the steps of:
(a) providing:
(i) a fibre component; and
(ii) a binder composition according to any of claims 1 to 7;
(iii) water;
(b) combining components (i) to (iii), wherein the weight ratio of (i) to (ii) is from about 1:1 to about 1:6, to form a mixture; and
(c) allowing the mixture to cure;
the method optionally further comprising the step of forming the mixture made during step (b) into a panel form before the mixture cures, optionally by moulding or casting.
